# EUROPÄISCHE PATENTSCHRIFT

(11) **EP 2 200 879 B1**
(45) Veröffentlichungstag und Bekanntmachung des Hinweises auf die Patenterteilung: **13.07.2011**
(21) Anmeldenummer: 08803582.9
(22) Anmeldetag: 03.09.2008
(51) Int. Cl.: B60T 7/10, B60T 13/74

(54) **VERFAHREN ZUM GESICHERTEN LÖSEN EINER ELEKTROMECHANISCH BETÄTIGBAREN FESTSTELLBREMSE**
METHOD FOR THE SECURE RELEASE OF AN ELECTROMECHANICALLY ACTUATABLE PARKING BRAKE
PROCÉDÉ DE RELÂCHEMENT SÉCURISÉ D'UN FREIN DE STATIONNEMENT À ACTIONNEMENT ÉLECTROMÉCANIQUE

(30) Priorität: 12.09.2007 DE 102007043555; 14.04.2008 DE 102008018749
(43) Veröffentlichungstag der Anmeldung: 30.06.2010
(73) Patentinhaber: Continental Teves AG & Co. OHG, 60488 Frankfurt (DE)
(72) Erfinder: SCHUMANN, Marcus, 68535 Edingen-Neckarhausen (DE); VÖLKEL, Jürgen, 60389 Frankfurt am Main (DE); MARON, Christof, 65779 Kelkheim (DE)
(86) Internationale Anmeldenummer: PCT/EP2008/061611
(87) Internationale Veröffentlichungsnummer: WO 2009/033990

(56) Entgegenhaltungen:
- DE-A1- 19 908 062
- DE-C2- 19 732 168
- FR-A- 2 808 486
- FR-A- 2 906 209

## Beschreibung

Die vorliegende Erfindung betrifft ein Verfahren zum gesicherten Lösen einer elektromechanisch betätigbaren Feststellbremse, die einen Bremskolben, der auf ein Reibglied wirkt und in eine Betätigungsstellung in einem Bremssattel verschiebbar ist, in der er das Reibglied gegen eine Bremsscheibe drückt und eine von einem Elektromotor angetriebene, zur Mittelachse des Bremskolbens koaxiale Spindel/Mutter-Anordnung zum mechanischen Feststellen des Bremskolbens in der Betätigungsstellung aufweist, deren Mutter gegen eine Drehung gesichert ist und durch eine Rotation der Spindel in Abhängigkeit der Drehrichtung translatorisch längs der Mittelachse entweder in Anlage an den Bremskolben oder vom Bremskolben weg bewegt wird, mit den Verfahrensschritten:
Antreiben der Spindel mittels des Elektromotors in Zuspannrichtung bis zum Erreichen einer vorgegebenen, maximalen Stromaufnahme, die einer vorgegebenen Zuspannkraft entspricht, bei gleichzeitiger Messung der Stromaufnahme und Ermittlung der Drehzahl des Elektromotors in Abhängigkeit der Zeit.

Ein derartiges Verfahren ist z. B. aus der DE 197 32 168 C2 bekannt, die u. a. Verfahren zum Ansteuern bzw. zum Spannen und Lösen einer elektromechanisch betätigbaren Feststellbremse der eingangs genannten Gattung beschreibt. Der genannten Veröffentlichung sind jedoch keine Hinweise zu entnehmen, wie ein optimaler Abstand zwischen dem Reibglied bzw. einem Bremsbelag und der Bremsscheibe eingestellt wird, bei dem keine Überhitzung der zusammen wirkenden Komponenten droht.

Es ist daher Aufgabe der vorliegenden Erfindung, ein Verfahren zum gesicherten Lösen einer elektromechanisch betätigbaren Feststellbremse aufzuzeigen, beim dem die Gefahr einer Überhitzung der Bremse weitestgehend eliminiert wird.

Diese Aufgabe wird erfindungsgemäß durch die folgenden Verfahrensschritte gelöst:
- Ermittlung eines der Zuspannkraft entsprechenden Verfahrweges des Bremskolbens anhand einer in einem Speicher abgelegten Steifigkeitskennlinie (F=f(x)) des Bremssattels im festgestellten Zustand;
- Bestimmung eines zweiten Verfahrweges durch Addition eines weiteren Verfahrwegwertes, der dem gewünschten Lüftspielwert entspricht, zum vorhin erwähnten Verfahrweg,
- Antreiben des Elektromotors in Löserichtung, bis der zweite Verfahrweg zurückgelegt wurde,
- Vergleichen der Fahrzeuggeschwindigkeit mit einem vorgegebenen ersten Geschwindigkeitswert, bei dessen Überschreiten der Elektromotor noch einmal in Löserichtung angetrieben wird, bis ein weiterer, vorher definierter Verfahrweg zurückgelegt wurde, bei dem gesichert zwischen dem Reibglied und der Bremsscheibe der Fahrzeugbremse keine Berührung stattfindet.

Besonders vorteilhaft ist es, wenn beim zuvor erläuterten Verfahren die Fahrzeuggeschwindigkeit mit einem zweiten vorgegebenen Geschwindigkeitswert verglichen wird, bei dessen Unterscheitung der Elektromotor in Zuspannrichtung solange angetrieben wird, bis der weitere Verfahrweg zurückgelegt wurde.

Gemäß einer bevorzugten Ausgestaltung des erfindungsgemäßen Verfahrens wird der vorgegebene Geschwindigkeitswert derart gewählt, dass der weitere Verfahrweg noch vor dem Fahrzeugstillstand zurückgelegt werden kann. Durch diese Maßnahmen wird erreicht, dass die kurze Aktivierungszeit der Feststellbremse gewährleistet bleibt.

Besonders bevorzugt ist das erfindungsgemäße Verfahren dahingehend weitergebildet, dass der dem tatsächlich eingestellten Lüftspiel entsprechende Verfahrweg beim nächsten Zuspannen der Bremse vermessen wird. Als Messwert des Verfahrweges wird vorzugsweise der Verfahrweg genommen, der im Zeitintervall to bis t₁ zurückgelegt wird, wobei t₀ der Zeitpunkt des Beginns des Antreibens des Elektromotors in Zuspannrichtung ist und t₁ der Zeitpunkt ist, bei dem die zeitliche Ableitung der Drehzahl einen Grenzwert erstmalig und danach für länger als eine vorgegebene Zeitdauer unterschreitet.

Unterschreitet der vermessene Verfahrweg einen vorgegebenen Wert, so wird der gewünschte Verfahrweg um einen festen Betrag erhöht. Überschreitet der vermessene Verfahrweg dagegen einen vorgegebenen Wert, so wird der gewünschte Verfahrweg um einen festen Betrag verringert. Durch die genannten Maßnahmen wird eine Erhöhung der Genauigkeit des erfindungsgemäßen Verfahrens sowie eine Adaption an diverse Umwelteinflüsse erreicht.

Das erfindungsgemäße Verfahren wird in der nachfolgenden Beschreibung im Zusammenhang mit der beiliegenden Zeichnung näher erläutert. In der Zeichnung zeigen:
- Fig. 1: eine Ausführung einer hydraulischen Fahrzeugbremse mit elektromechanischer Feststellbremse in einer axialen Schnittdarstellung;
- Fig. 2: eine diagrammatische Darstellung eines Zuspannvorgangs der elektromechanischen Feststellbremse gemäß Fig. 1;
- Fig. 3: eine Steifigkeitskennlinie des Bremssattels der hydraulischen Fahrzeugbremse gemäß Fig. 1;
- Fig. 4a bis c: einander korrespondierende zeitliche Verläufe der erfindungsspezifischen Parameter, des Verfahrweges x des Bremskolbens sowie der Fahrzeuggeschwindigkeit v zur Erläuterung des erfindungsgemäßen Verfahrens und
- Fig. 5: eine Fig. 2 entsprechende diagrammatische Darstellung eines Zuspannvorgangs der elektromechanischen Feststellbremse zur Erläuterung des erfindungsgemäßen Verfahrens.

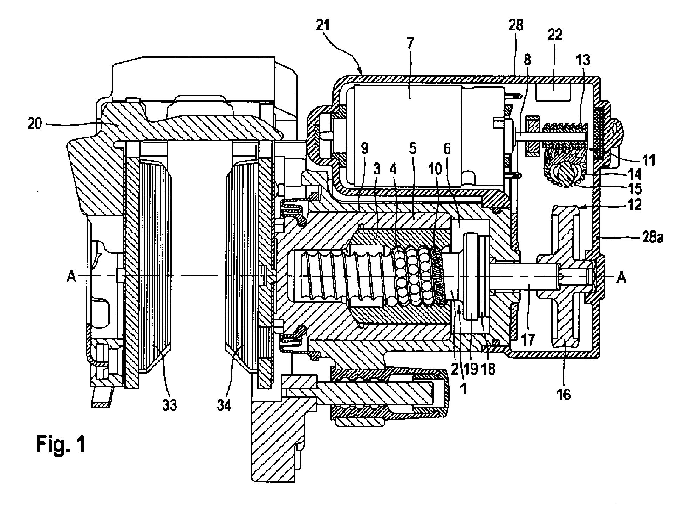

Die in Fig. 1 dargestellte erfindungsgemäße hydraulische Fahrzeugbremse weist einerseits eine hydraulisch betätigbare Betriebsbremse und andererseits eine elektromechanisch betätigbare Feststellbremse auf. Die Fahrzeugbremse ist im gezeigten Beispiel als Schwimmsattel-Scheibenbremse ausgeführt, deren durch eine hydraulische Betätigung hervorgerufene Funktion dem auf diesem Gebiet tätigen Fachmann wohlbekannt ist und deswegen nicht näher erläutert zu werden braucht. Der Betätigung der Feststellbremse dient ein elektromechanischer Aktuator bzw. Elektromotor, der zusammen mit einem zweistufigen Getriebe, der erforderlichen Sensorik sowie einer elektronischen Steuereinheit 21 in einem Antriebsmodul 22 integriert ist. Die oben erwähnte Fahrzeugbremse weist weiterhin ein Bremsgehäuse bzw. einen Bremssattel 20 auf, welcher den äußeren Rand einer nicht dargestellten Bremsscheibe und zwei auf beiden Seiten der Bremsscheibe angeordnete Bremsbeläge 33, 34 umgreift. Das Bremsgehäuse 20 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Kolbenlängsachse A zur Bremsscheibe hin verschiebt. Dadurch wird der dem Bremskolben 5 zugewandte Bremsbelag 34 gegen die Bremsscheibe gedrückt, wobei als Reaktion das Bremsgehäuse 20 sich in der entgegen gesetzten Richtung verschiebt und dadurch auch den anderen Bremsbelag 33 gegen die Bremsscheibe drückt.

Wie bereits erwähnt wurde, ist eine Feststellbremsvorrichtung zur Durchführung von Feststellbremsvorgängen elektromechanisch betätigbar und wirkt ebenfalls auf den Bremskolben 5. Dazu ist ein Getriebe 1 vorgesehen, das die Rotationsbewegung des elektromechanischen Aktuators bzw. Elektromotors 7 in eine Translationsbewegung umsetzt und eine Betätigung des Bremskolbens 5 entlang der Achse A bewirkt. Das Getriebe 1 wird im Wesentlichen durch eine Gewindespindel 2 und eine Gewindemutter 3 gebildet, die über Wälzkörper 4 miteinander in Verbindung stehen. Die Wälzkörper 4 sind als Kugeln ausgebildet. Ein mit der Gewindespindel 2 verbundener Schaft 17 ragt an der der Bremsscheibe abgewandten Seite aus dem Bremsgehäuse 20 heraus und wird unter Zwischenschaltung eines zweistufigen Untersetzungsgetriebes von dem vorhin erwähnten elektromechanischen Aktuator 7 angetrieben. Dabei sind Mittel zum Abdichten des Betriebsdruckraums 6 in der Bohrung des Bremsgehäuses 20, durch die der Schaft 17 ragt, vorgesehen. Die auf die Gewindespindel 2 übertragene Rotationsbewegung wird über die Kugeln 4, die sich im Gewindegang zwischen Gewindespindel 2 und Gewindemutter 3 befinden, auf die Gewindemutter 3 übertragen, die eine Translationsbewegung in Richtung der Achse A vollzieht. Dadurch wird auch der Bremskolben 5 betätigt, an dem sich die Gewindemutter 3 abstützt. Gleichzeitig stützt sich die Gewindespindel 2 über einen mit der Spindel 2 verbundenen Kragen 19 und ein erstes Axiallager 18 am Bremsgehäuse 20 ab. Das Getriebe 1 setzt also die Drehbewegung des elektromechanischen Aktuators 7 in eine Linearbewegung um und ist für die Generierung der Zuspannkraft zur Durchführung eines Feststellbremsvorganges verantwortlich.

Bei einer Betätigung des Getriebes 1 unter Last rollen die Wälzkörper 4 im Gewindegang ab. Dadurch wird ein verhältnismäßig hoher Wirkungsgrad von 75% bis 90% erreicht. Bei einem lastfreien Betätigen des Getriebes 1 rutschen die Wälzkörper 4 dagegen, d.h. bis der dem Bremskolben 5 zugeordnete Bremsbelag 34 an der nicht dargestellten Bremsscheibe anliegt, rutschen die Kugeln 4, weil es sich hierbei um eine nahezu lastfreie Betätigung handelt. Erst unter Last beginnen die Kugeln 4 zu wälzen bzw. abzurollen. Das Getriebe 1 wirkt also gleichzeitig als Nachstellung falls die Bremsbeläge 33, 34 verschlissen sind. Der Verzicht auf eine separate Nachstelleinrichtung bzw. die Integration von Nachstelleinrichtung und Betätigungseinrichtung in ein einziges Bauteil ist besonders kostengünstig und gleichzeitig robust. Damit das Abrollen der Wälzkörper 4 unter Last und das Rutschen bei lastfreier Betätigung des Getriebes 1 stets möglich ist, ist ein Federelement 10 vorgesehen, das einen Wälzweg zum Abrollen der Wälzkörper vorhält.

Der vorhin erwähnte Elektromotor 7 und das zweistufige Getriebe werden dabei von einem zum Antriebsmodul 21 gehörenden Gehäuse 28 aufgenommen, das mit einem Gehäusedeckel 28a verschließbar ist. In der dargestellten Ausführungsform ist das zweistufige Getriebe als Schneckengetriebe 11, 12 ausgebildet. Schneckengetriebe sind eine Kategorie der Schraubwälzgetriebe, bei denen im Gegensatz zu den Wälzgetrieben auch ein Gleitanteil in der Bewegung vorhanden ist. Aufgebaut ist ein solches Schneckengetriebe aus einem schraubenförmig verzahnten Rad, einer Schnecke, und einem darin kämmenden schrägverzahnten Rad, dem Schneckenrad.

Die erste Getriebestufe, das heißt das erste Schneckengetriebe 11, ist eingangsseitig mit der Ausgangswelle 8 des Elektromotors 7 verbunden, während die zweite Getriebestufe, das heißt das zweite Schneckengetriebe 12, ausgangsseitig mit dem Schaft 17 bzw. mit dem Getriebe 1 bzw. 2, 3 verbunden ist. Wie es dargestellt ist, ist eine erste Schnecke 13 auf die Ausgangswelle 8 des Elektromotors 7 aufgesteckt und kämmt ein erstes Schneckenrad 14. Auf das Drehzentrum des ersten Schneckenrads 14 ist eine zweite Schnecke 15 aufgesteckt und wird von diesem in Rotation versetzt. Die zweite Schnecke 15 wiederum kämmt ein zweites Schneckenrad 16, das drehfest mit dem Schaft 17 verbunden ist und den Schaft 17 gemeinsam mit dem Getriebe 1 in Rotation versetzt und dabei eine translatorische Bewegung des Bremskolbens 5 erzeugt. Damit die auf diese Weise eingestellte Zuspannkraft während eines Feststellbremsvorganges erhalten bleibt, ist das zweite Schneckengetriebe 12 selbsthemmend ausgeführt.

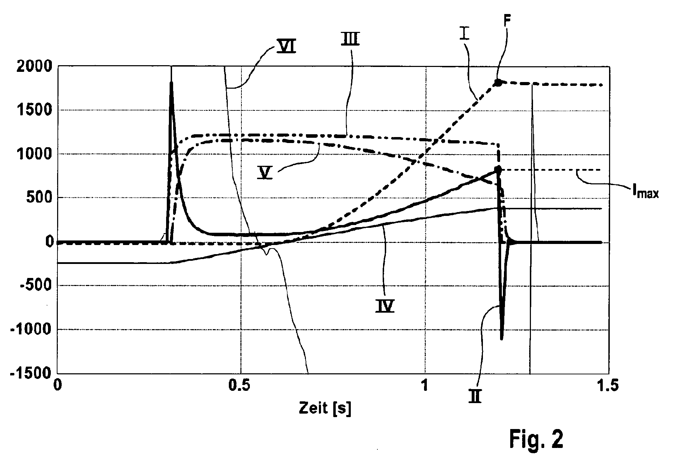

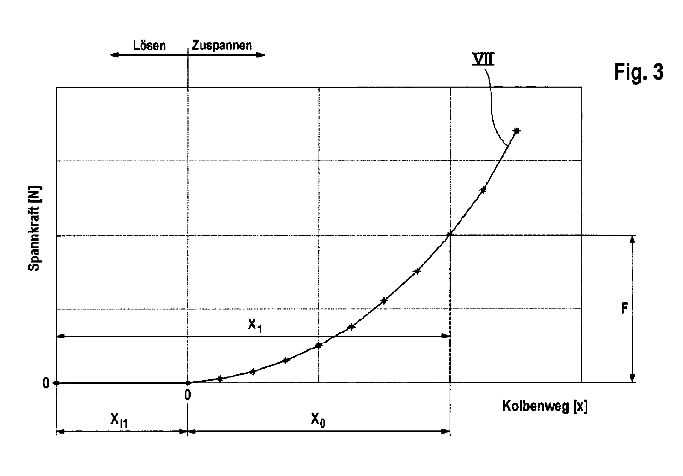

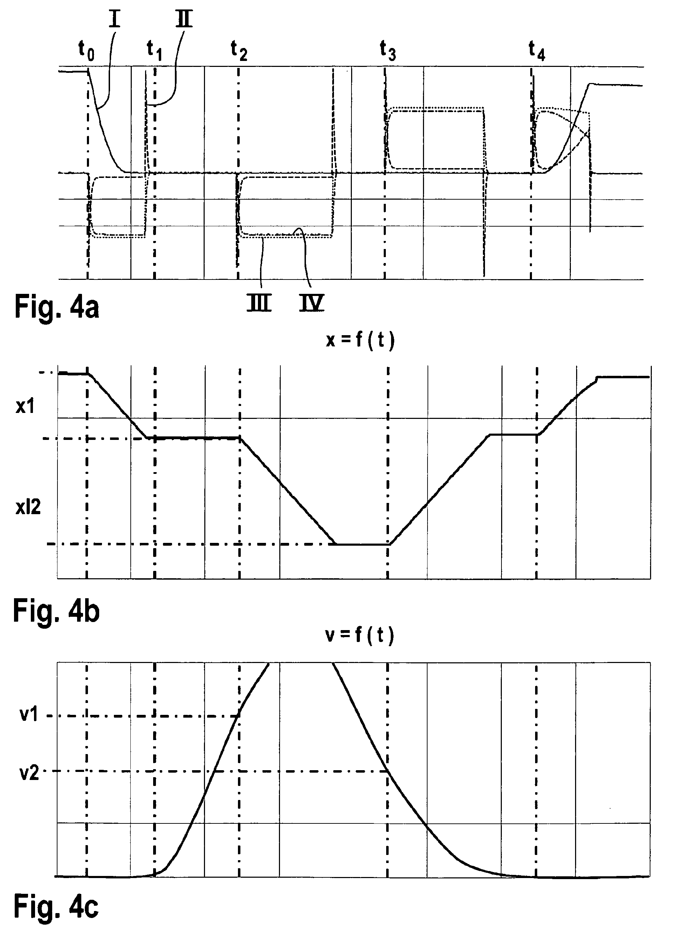

Das erfindungsgemäße Verfahren wird in der nachfolgenden Beschreibung im Zusammenhang mit den Fig. 2 bis 5 näher erläutert. In Fig. 2 ist ein Zuspannvorgang der elektromechanischen Feststellbremse dargestellt, in dem die zeitlichen Verläufe der Zuspannkraft (I), des dem Elektromotor 7 zugeführten Stroms (II), der an den Elektromotor 7 angelegten Spannung (III), des vom Bremskolben 5 zurückgelegten Verfahrweges (IV), der Drehzahl des Elektromotors (V) sowie der zeitlichen Ableitung der Drehzahl (VI) gezeichnet sind. Zu Beginn der Durchführung des erfindungsgemäßen Verfahrens wird die Gewindespindel 2 mittels des Elektromotors 7 in Zuspannrichtung bis zum Erreichen einer vorgegebenen, maximalen Stromaufnahme Iₘₐₓ angetrieben, die einer vorgegebenen Zuspannkraft F entspricht. Einer in einem in der elektronischen Steuereinheit 22 enthaltenen, nichtflüchtigen Speicher abgelegten Steifigkeitskennlinie (VII in Fig. 3) des Bremssattels im festgestellten Zustand wird entnommen, dass der vorgegebenen Zuspannkraft F ein Verfahrweg des Bremskolbens 5 entspricht, der mit x₀ bezeichnet wird. Dabei zeigt die Steifigkeitskennlinie VII die Abhängigkeit F = f(x)der Zuspannkraft F vom Verfahrweg x des Bremskolbens 5. Im nächsten Verfahrensschritt wird ein zweiter Verfahrwegwert x₁ [(x₁=x₀+x₁₁)] berechnet, indem zum Verfahrweg x₀ ein weiterer Verfahrwegwert x₁₁ hinzu addiert wird, der dem gewünschten Lüftspielwert entspricht. In einem weiteren Verfahrensschritt wird die Gewindespindel 2 mittels des Elektromotors 7 in entgegengesetzter Richtung bzw. der Löserichtung der Feststellbremse (s. Fig. 4a, b, c, t₀) so lange angetrieben, bis der Bremskolben 5 den zweiten Verfahrweg x₁ zurück gelegt hatte (s. Fig. 4a, b, c, t₁). Gleichzeitig wird die Geschwindigkeit v des Fahrzeuges mit einem ersten vorgegebenen Geschwindigkeitswert v₁ verglichen. Ist die Fahrzeuggeschwindigkeit v höher als der erste Geschwindigkeitswert v₁, so wird die Gewindespindel 2 mittels des Elektromotors 7 in Löserichtung der Feststellbremse weiter angetrieben, bis ein weiterer vorher definierter Verfahrweg x₁₂ zurückgelegt wurde (s. Fig. 4a, b, c, t₂). Der Verfahrweg x₁₂ ist dabei vorzugsweise derart festgelegt, dass nach dessen Zurücklegen durch den Bremskolben 5 zwischen dem Reibbelag 33 und der Bremsscheibe der Fahrzeugbremse keine Berührung stattfindet. Die Fahrzeuggeschwindigkeit v wird auch mit einem zweiten Geschwindigkeitswert v₂ verglichen, der kleiner als der erste Geschwindigkeitswert v₁ ist. Unterschreitet die Fahrzeuggeschwindigkeit v deutlich den Wert v₂, so wird die Spindel mittels des Elektromotors 7 in Zuspannrichtung angetrieben. Dabei wird der zweite Geschwindigkeitswert v₂ derart gewählt, dass der weitere Verfahrweg x₁₂ noch vor dem Fahrzeugstillstand zurückgelegt werden kann. Der Zusammenhang zwischen den vorhin genannten Verfahrwegen x₁, x₁₂ und der Fahrzeuggeschwindigkeit v bzw. deren Werten v₁, v₂ ist in Fig. 4b, 4c dargestellt, wobei Fig. 4b den zeitlichen Verlauf des Verfahrweges x = f(t) beim Lösen der Feststellbremse und Fig. 4c den zeitlichen Verlauf der Fahrzeuggeschwindigkeit v = f(t) zeigen.

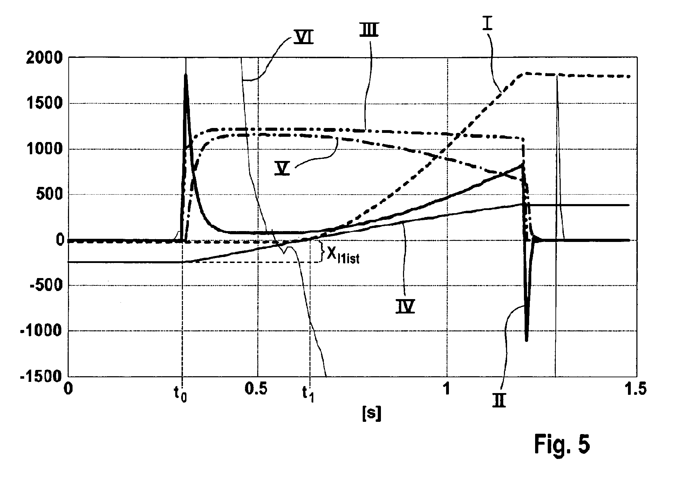

Beim nächsten Zuspannen der Feststellbremse, dessen zeitlicher Verlauf in Fig. 5 dargestellt ist, wird das tatsächlich eingestellte Lüftspiel bzw. der ihm entsprechende Verfahrweg x₁₁ᵢₛₜ vermessen. Als Messwert wird der Verfahrweg (x₁₁ᵢₛₜ) genommen, der im Zeitintervall t₀ bis t₁ zurückgelegt wird, wobei t₀ der Zeitpunkt des Beginns des Antreibens der Gewindespindel 2 in Zuspannrichtung der Feststellbremse ist und t₁ der Zeitpunkt ist, bei dem die zeitliche Ableitung VI der Drehzahl n einen Grenzwert erstmalig und danach für länger als eine vorgegebene Zeitdauer unterschreitet.

Anschließend wird der dem eingestellten Lüftspiel entsprechende Verfahrweg x₁₁ᵢₛₜ mit einem ersten vorgegebenen Wert x₁₀ verglichen. Wird der genannte Wert x₁₀ vom Verfahrweg x₁₁ᵢₛₜ unterschritten, so wird der dem eingestellten Lüftspiel entsprechende Verfahrweg x₁₁ für den nächsten Lösevorgang um einen festen Betrag erhöht. Falls der Wert x₁₀ nicht unterschritten wird, dann wird ein zweiter Vergleich vorgenommen. Wenn aus dem zweiten Vergleich hervor geht, dass der dem eingestellten Lüftspiel entsprechende Verfahrweg x₁₁ᵢₛₜ größer ist als x₁₀, wird der dem gewünschten Lüftspiel entsprechende Verfahrweg x₁₁ um einen festen Betrag verringert.

## Patentansprüche

1. Verfahren zum gesicherten Lösen einer elektromechanisch betätigbaren Feststellbremse, die einen Bremskolben (5), der auf ein Reibglied wirkt und in eine Betätigungsstellung in einem Bremssattel (20) verschiebbar ist, in der er das Reibglied gegen eine Bremsscheibe drückt und eine von einem Elektromotor (7) angetriebene, zur Kolbenlängsachse (A) des Bremskolbens (5) koaxiale Gewindespindel (2)/Gewindemutter (3)-Anordnung zum mechanischen Feststellen des Bremskolbens (5) in der Betätigungsstellung aufweist, deren Gewindemutter (3) gegen eine Drehung gesichert ist und durch eine Rotation der Gewindespindel (2) in Abhängigkeit der Drehrichtung translatorisch längs der Kolbenlängsachse (A) entweder in Anlage an den Bremskolben (5) oder vom Bremskolben (5) weg bewegt wird, mit den Verfahrensschritten:
- Antreiben der Gewindespindel (2) mittels des Elektromotors (7) in Zuspannrichtung bis zum Erreichen einer vorgegebenen, maximalen Stromaufnahme (Iₘₐₓ), die einer vorgegebenen Zuspannkraft (F) entspricht, **gekennzeichnet durch** die folgenden Verfahrensschritte:
- Ermittlung eines der Zuspannkraft (F) entsprechenden Verfahrweges (x₀) des Bremskolbens (5) anhand einer in einem Speicher abgelegten Steifigkeitskennlinie (F=f(x)) des Bremssattels (20) im festgestellten Zustand;
- Bestimmung eines zweiten Verfahrweges (x₁) **durch** Addition eines weiteren Verfahrwegwertes (x₁₁), der dem gewünschten Lüftspielwert entspricht, zu (x₀), [(x₁=x₀+x₁₁)]
- Antreiben des Elektromotors (7) in Löserichtung, bis der zweite Verfahrweg (x₁) vom Bremskolben (5) zurückgelegt wurde,
- Vergleichen der Fahrzeuggeschwindigkeit (v) mit einem vorgegebenen ersten Geschwindigkeitswert (v₁), bei dessen Überschreiten der Elektromotor (7) noch einmal in Löserichtung angetrieben wird, bis ein weiterer vorher definierter Verfahrweg (x₁₂) zurückgelegt wurde, bei dem gesichert zwischen dem Reibglied (33) und der Bremsscheibe der Fahrzeugbremse keine Berührung stattfindet.

2. Verfahren nach Anspruch 1 **dadurch gekennzeichnet, dass** die Fahrzeuggeschwindigkeit mit einem zweiten vorgegebenen Geschwindigkeitswert (v₂<=v₁) verglichen wird, bei dessen Unterscheitung der Elektromotor (7) in Zuspannrichtung solange angetrieben wird, bis der weitere Verfahrweg (x₁₂) zurückgelegt wurde.

3. Verfahren nach Anspruch 2 **dadurch gekennzeichnet, dass** der vorgegebene Geschwindigkeitswert (v₂) derart gewählt wird, dass der weitere Verfahrweg (x₁₂) noch vor dem Fahrzeugstillstand zurückgelegt werden kann.

4. Verfahren nach Anspruch 1 bis 3 **dadurch gekennzeichnet, dass** der dem tatsächlich eingestellten Lüftspiel entsprechende Verfahrweg (x₁₁ᵢₛₜ) beim nächsten Zuspannen der Bremse vermessen wird.

5. Verfahren nach Anspruch 4 **dadurch gekennzeichnet, dass** als Messwert der Verfahrweg (x) genommen wird, der im Zeitintervall t₀ bis t₁ zurückgelegt wird, wobei t₀ der Zeitpunkt des Beginns des Antreibens des Elektromotors in Zuspannrichtung ist und t₁ der Zeitpunkt ist, bei dem die zeitliche Ableitung (dn/dt) der Drehzahl (n) einen Grenzwert erstmalig und danach für länger als eine vorgegebene Zeitdauer unterscheitet.

6. Verfahren nach Anspruch 4 und 5 **dadurch gekennzeichnet, dass** beim Unterschreiten des vermessenen Verfahrweges (x₁₁ᵢₛₜ) unter einen vorgegebenen Wert (x₁₀) der gewünschte Verfahrweg (x₁₁) um einen festen Betrag erhöht wird.

7. Verfahren nach Anspruch 4 und 6 **dadurch gekennzeichnet, dass** beim Überschreiten des vermessenen Verfahrweges (x₁₁ᵢₛₜ) über einen vorgegebenen Wert der gewünschte Verfahrweg (x₁₁) um einen festen Betrag verringert wird.

## Claims

1. Method for the secured release of an electromechanically actuable parking brake which has a brake piston (5), which acts on a friction element and is displaceable into an actuation position in a brake calliper (20) in which it presses the friction element against a brake disc, and a threaded spindle (2)/threaded nut (3) arrangement which is driven by an electric motor (7), is coaxial with respect to the piston longitudinal axis (A) of the brake piston (5) and has the purpose of mechanically locking the brake piston (5) in the actuation position, the threaded nut (3) of which threaded spindle/threaded nut arrangement is secured against rotation and moved by a rotation of the threaded spindle (2) in a translatory fashion along the piston longitudinal axis (A) either in abutment against the brake piston (5) or away from the brake piston (5) depending on the rotational direction, having the method steps:
- driving of the threaded spindle (2) by means of the electric motor (7) in the brake application direction until a predefined, maximum power drain (Iₘₐₓ), corresponding to a predefined brake application force (F), is reached, **characterized by** the following method steps:
- detection of a travel distance (x₀) of the brake piston (5) which corresponds to the brake application force (F), by means of a stiffness characteristic curve (F=f(x)), stored in a memory, of the brake calliper (20) in the locked state;
- determination of a second travel distance (x₁) by addition of a further travel distance value (x₁₁), which corresponds to the desired clearance value, to form (x₀), [(x₁=x₀+x₁₁)]
- driving of the electric motor (7) in the release direction until the second travel distance (x₁) has been covered by the brake piston (5),
- comparison of the vehicle speed (v) with a predefined first speed value (v₁), at the upward transgression of which the electric motor (7) is driven once more in the release direction until a further, previously defined travel distance (x₁₂) has been covered, during which travel distance (x₁₂) it is insured, in a secured fashion, that no contact takes place between the friction element (33) and the brake disc of the vehicle brake.

2. Method according to Claim 1, **characterized in that** the vehicle speed is compared with a second predefined speed value (v₂<=v₁), at the downward transgression of which the electric motor (7) is driven in the brake application direction until the further travel distance (x₁₂) has been covered.

3. Method according to Claim 2, **characterized in that** the predefined speed value (v₂) is selected in such a way that the further travel distance (x₁₂) can still be covered before the vehicle is in a stationary state.

4. Method according to Claims 1 to 3, **characterized in that** the travel distance (x_{11act}) which corresponds to the actually set clearance is measured when the brake is next applied.

5. Method according to Claim 4, **characterized in that** the travel distance (x) which is covered in the time interval to to t₁ is taken as the measured value, where t₀ is the time when the driving of the electric motor in the brake application direction starts, and t₁ is the time at which the time derivative (dn/dt) of the rotational speed (n) first drops below a limiting value and thereafter drops below it for longer than a predefined time period.

6. Method according to Claims 4 and 5, **characterized in that**, when the measured travel distance (x_{11act}) drops below a predefined value (x₁₀), the desired travel distance (x₁₁) is increased by a fixed absolute value.

7. Method according to Claims 4 and 6, **characterized in that**, when the measured travel distance (x_{11act}) exceeds a predefined value, the desired travel distance (x₁₁) is reduced by a fixed absolute value.

## Revendications

1. Procédé de desserrage sécurisé d'un frein d'immobilisation à actionnement électromécanique, lequel présente un piston de frein (5) qui agit sur un élément de friction et peut se déplacer dans une position d'actionnement dans un étrier de frein (20) dans laquelle il pousse l'élément de friction contre un disque de frein ainsi qu'un arrangement tige filetée (2) / écrou fileté (3) coaxial par rapport à l'axe de piston longitudinal (A) du piston de frein (5) entraîné par un moteur électrique (7) pour immobiliser mécaniquement le piston de frein (5) dans la position d'actionnement, dont l'écrou fileté (3) est bloqué pour empêcher une rotation et qui est amené dans un mouvement translatoire le long de l'axe de piston longitudinal (A) par une rotation de la tige filetée (2), suivant le sens de rotation, soit en appui contre le piston de frein (5), soit à l'écart du piston de frein (5), le procédé comprenant les étapes suivantes :
- entraînement de la tige filetée (2) au moyen du moteur électrique (7) dans le sens de l'application du frein jusqu'à atteindre une consommation de courant maximale (Iₘₐₓ) prédéfinie qui correspond à une force d'application du frein (F) prédéfinie, **caractérisé par** les étapes suivantes :
- détermination d'une course de déplacement (x₀) du piston de frein (5) correspondant à la force d'application du frein (F) au moyen d'une courbe caractéristique de rigidité (F=f(x)) de l'étrier de frein (20) à l'état d'immobilisation stockée dans une mémoire ;
- détermination d'une deuxième course de déplacement (x₁) en additionnant à (x₀) une valeur de course de déplacement supplémentaire (x₁₁) qui correspond à la valeur de jeu d'entrefer souhaitée [(x₁=(x₀+x₁₁)]
- entraînement du moteur électrique (7) dans la direction du desserrage jusqu'à ce que la deuxième course de déplacement (x₁) ait été parcourue par le piston de frein (5),
- comparaison de la vitesse du véhicule (v) avec une première valeur de vitesse (v₁) prédéfinie dont le dépassement a pour effet que le moteur électrique (7) est une nouvelle fois entraîné dans la direction du desserrage jusqu'à ce qu'une course de déplacement supplémentaire (x₁₂) préalablement définie ait été parcourue, à laquelle il n'existe de manière sécurisée aucun contact entre l'élément de friction (33) et le disque de frein du frein du véhicule.

2. Procédé selon la revendication 1, **caractérisé en ce que** la vitesse du véhicule est comparée avec une deuxième valeur de vitesse (v₂<=v₁) prédéfinie en dessous de laquelle le moteur électrique (7) est entraîné dans le sens de l'application du frein jusqu'à ce que la course de déplacement supplémentaire (x₁₂) ait été parcourue.

3. Procédé selon la revendication 2, **caractérisé en ce que** la valeur de vitesse (v₂) prédéfinie est choisie de telle sorte que la course de déplacement supplémentaire (x₁₂) puisse être parcourue encore avant l'immobilisation du véhicule.

4. Procédé selon les revendications 1 à 3, **caractérisé en ce que** la course de déplacement (x₁₁ᵢₛₜ) correspondant au jeu d'entrefer réellement réglé est mesurée à la prochaine application du frein.

5. Procédé selon la revendication 4, **caractérisé en ce que** la valeur mesurée adoptée est la course de déplacement (x) qui est parcourue dans l'intervalle de temps de t₀ à t₁, t₀ désignant l'instant du début de l'entraînement du moteur électrique dans le sens de l'application du frein et t₁ désignant l'instant auquel la dérivée dans le temps (dn/dt) de la vitesse de rotation (n) devient pour la première fois inférieure à une valeur limite et y reste ensuite inférieure pendant plus longtemps qu'une durée prédéfinie.

6. Procédé selon la revendication 4 ou 5, **caractérisé en ce que** dans le cas où la course de déplacement (x₁₁ᵢₛₜ) mesurée devient inférieure à une valeur prédéfinie (x₁₀), la course de déplacement souhaitée (x₁₁) est augmentée d'une valeur fixe.

7. Procédé selon les revendications 4 et 6, **caractérisé en ce que** dans le cas où la course de déplacement (x₁₁ᵢₛₜ) mesurée devient supérieure à une valeur prédéfinie, la course de déplacement souhaitée (x₁₁) est réduite d'une valeur fixe.
